# EUROPÄISCHE PATENTSCHRIFT

(11) **EP 2 409 384 B1**
(45) Veröffentlichungstag und Bekanntmachung des Hinweises auf die Patenterteilung: **17.07.2013**
(21) Anmeldenummer: 10710295.6
(22) Anmeldetag: 19.03.2010
(51) Int. Cl.: H02K 7/14

(54) **ELEKTROMOTORANORDNUNG FÜR EIN MEDIZINISCHES, INSBESONDERE EIN DENTALES HANDSTÜCK**
ELECTRIC MOTOR ARRANGEMENT FOR A MEDICAL, ESPECIALLY DENTAL, TOOL HOLDER
AGENCEMENT DE MOTEUR ÉLECTRIQUE POUR UNE PIÈCE À MAIN MÉDICALE, EN PARTICULIER DENTAIRE

(30) Priorität: 20.03.2009 DE 102009014066
(43) Veröffentlichungstag der Anmeldung: 25.01.2012
(73) Patentinhaber: Kaltenbach & Voigt GmbH, 88400 Biberach (DE)
(72) Erfinder: DÜSING, Josef, 88299 Leutkirch (DE); MADER, Alfons, 88316 Isny (DE); STEMPFLE, Johann, 89284 Pfaffenhofen (DE)
(74) Vertreter: Thun, Clemens
(86) Internationale Anmeldenummer: PCT/EP2010/053595
(87) Internationale Veröffentlichungsnummer: WO 2010/106157

(56) Entgegenhaltungen:
- EP-A1- 1 841 043
- EP-A2- 0 788 779
- EP-A2- 1 753 113
- DE-A1- 10 033 577
- US-A1- 2006 232 143

## Beschreibung

Die vorliegende Erfindung betrifft eine Elektromotoranordnung für ein medizinisches, insbesondere ein dentales Handstück, insbesondere einen Dentalkleinmotor, also einen kompakt gestalteten Elektromotor, der insbesondere zur Verwendung in zahnmedizinischen Handgeräten vorgesehen ist. Eine solche Elektromotoranordnung wird im Folgenden auch kurz als "Dentalmotor" oder "Dentalkleinmotor" bezeichnet.

Insbesondere betrifft die Erfindung eine Elektromotoranordnung, die dafür vorgesehen ist, über eine Kupplung mit einem medizinischen, insbesondere mit einem dentalen Hand- und Winkelstück, im Folgenden auch kurz "Handstück" genannt, verbunden zu werden, wobei das Handstück dazu ausgebildet ist, ein drehbar gelagertes Werkzeug aufzunehmen, und wobei, wenn die Elektromotoranordnung mit dem Handstück wie vorgesehen gekoppelt ist, ein von der Elektromotoranordnung erzeugtes Drehmoment auf das Werkzeug übertragen werden kann. Eine entsprechende Anordnung ist beispielsweise aus der DE 33 32 627 A1 bekannt. Weiterhin kann insbesondere vorgesehen sein, dass mit Bezug auf die Elektromotoranordnung dem Handstück gegenüberliegend ein Versorgungsschlauch durch Kupplung angeschlossen wird, der zur Versorgung der Elektromotoranordnung bzw. des Handstücks dient und der beispielsweise Medienleitungen aufweist, durch die Medien wie Luft und/oder Wasser zur Bildung eines Sprays transportiert werden können. Auch eine Stromleitung und/oder eine Lichtleitung können in dem Versorgungsschlauch angeordnet sein.

Dentalkleinmotore sind je nach Anwendung mehr oder weniger häufig zu sterilisieren. Dies erfolgt immer mehr mit Sterilisatoren der Class B. Bei der Kammerentlüftung mittels Vorvakuum wird der Motor mehrmals einem Unterdruck von bis zu ca. 50mbar abs. sowie im Wechsel Heißdampf mit 134°C ausgesetzt. Dieser Sterilisationsvorgang greift den Isolationslack der Kupferdrähte, Tränkharze, Klebstoffe und auch Vergußmassen (Silikon), mit welchen die Statorwicklung fixiert und geschützt wird, extrem an, erzeugt Risse in diesen Werkstoffen und baut diese ab, was letztlich zu einer fehlenden Isolation und einem Windungsschluss führt.

Zur Erzielung sterilisationsbeständiger Motoren ist es erforderlich, dass der Stator komplett und dicht mit einem sterilisationsbeständigen Hochtemperaturpolymer (z.B. PEEK, PPS, LCP, PAI, PPSU, PSU, PES) ummantelt ist.

Aus dem Stand der Technik (KL 70/1702) ist ein Stator bekannt, bei welchem die Wicklung mit PPS umspritzt ist. Am Umfang sind sechs Aussparungen für die Medienleitung (Rohre) von der Versorgungsschlauch-Anschlussseite zur Instrumentenseite bzw. Handstückseite vorhanden. Der magnetische Rückschluss ist ein separates Bauteil und nicht vollständig umspritzt. Zur Erzielung der erforderlichen Motorleistung muss der Abstand zwischen Rückschluss und Dauermagnet klein ausgeführt sein. Für den umspritzten Stator bleibt nur begrenzt Platz, was zur Folge hat, dass die Kunststoffummantelung sehr dünn ausgeführt ist und speziell im Bereich der Medienleitung nicht vollständig geschlossen ist. Diese Fehlstellen in der Kunststoffhülle sowie der nicht umspritzte Rückschluss reduzieren die Lebensdauer bei Sterilisation mit gesättigtem Heißdampf und fraktioniertem Vorvakuum drastisch.

Aus dem so genannten "Chirurgiemotor 550" ist ferner ein Stator bekannt, bei welchem ein Wickelkopf nicht mit Kunststoff ummantelt ist. Der Heißdampf greift die freiliegenden Kupferlackdrähte trotz Versiegelung mit Tränkharz an.

Aus dem so genannten System "COMFORTdrive" der Anmelderin ist ein Stator bekannt, bei welchem die Spule mit Kupferlackdrähten sowie der weichmagnetische Rückschluss vollständig umspritzt sind und die Kontaktierung der einzelnen Spulenphasen über im Statorkörper dicht eingespritzte Kontakte erfolgt. Die Medienrohre sowie der Glasfiberstab zur Lichtleitung befinden sich außerhalb des umspritzten Statorkörpers in einer segmentartigen Aussparung des Stators, was einen asymmetrischen Statorkörper zur Folge hat.

Weiterhin ist aus ergonomischen Gründen erwünscht, eine entsprechende Elektromotoranordnung möglichst kompakt bzw. mit besonders kleiner Baugröße gestalten zu können. Auch ein möglichst geringes Gewicht ist vor diesem Hintergrund erwünscht.

Aus der EP 1 753 113 A2 ist ein Elektromotor für die Dentaltechnik bekannt, der eine Rotoreinheit und ein Statorpaket aufweist, sowie mehrere, sich axial erstreckende Kanäle zur Aufnahme von Fluiden oder Gas. Zum Schutz gegen negative Sterilisationseinflüsse ist das Statorpaket mit einer Beschichtung umhüllt. Die Kanäle sind dabei in der Beschichtung integriert.

Aus der US 2006/0232143 A1 ist ein Elektromotor mit einem eingegossenen Stator bekannt. In dem gegossenen Teil sind axiale Kanäle ausgebildet.

Der Erfindung liegt die Aufgabe zugrunde, eine Elektromotoranordnung für ein medizinisches, insbesondere ein dentales Handstück, anzugeben, die sterilisationsbeständig ist und dabei eine besonders kompakte Bauweise des Handstücks ermöglicht.

Diese Aufgabe wird gemäß der Erfindung durch eine Elektromotoranordnung gemäß dem Anspruch 1 gelöst. Besondere Ausführungsformen sind in den vom Anspruch 1 abhängigen Ansprüchen angegeben.

Gemäß dem ersten Aspekt der Erfindung ist eine Elektromotoranordnung für ein medizinisches, insbesondere ein dentales Handstück vorgesehen, das einen Rotor mit einer Rotorwelle aufweist sowie einen Stator, der mit Bezug auf die Rotorwelle um den Rotor herum angeordnet ist; außerdem weist die Elektromotoranordnung ein Medienrohr zur Durchleitung eines Mediums auf. Weiterhin weist die Elektromotoranordnung ein durch Umspritzen gebildetes Mantelelement auf, das, mit Bezug auf die Rotorwelle, sowohl der Stator als auch das Medienrohr von außen ringförmig geschlossen dicht umgibt.

Durch das Mantelelement lässt sich die Elektromotoranordnung sterilisationsbeständig ausgestalten. Dadurch, dass auch das Medienrohr von dem Mantelelement von außen umgeben ist, ist dabei eine besonders kompakte Bauform der Elektromotoranordnung ermöglicht, die im Weiteren eine besonders kompakte Gestaltung des entsprechenden Handstücks ermöglicht.

Vorzugsweise besteht das Mantelelement aus einem Hochtemperaturpolymer. Ein solches Material eignet sich besonders gut zum Schutz des Stators im Fall einer Sterilisation.

Vorzugsweise weist der Stator weiterhin eine Statorwicklung auf, wobei ein erster Teil der Statorwicklung mit Bezug auf die Rotorwelle radial außerhalb des Medienrohrs angeordnet ist und ein zweiter Teil der Statorwicklung radial innerhalb. Das Medienrohr lässt sich auf diese Weise gleichsam in den Stator integrieren, so dass eine besonders kleinräumige Gestaltung des Stators, insbesondere mit Bezug auf seine radiale Erstreckung ermöglicht ist.

Vorzugsweise erstreckt sich das Mantelelement längs der Rotorwelle betrachtet zu beiden Seiten über den Stator hinaus. Auf diese Weise lässt sich die Abdichtung und damit der Schutz des Stators, insbesondere im Fall einer Sterilisation, weiterhin verbessern. Weiterhin vorteilhaft umgibt dabei das Mantelelement zu beiden Seiten des Stators das Medienrohr jeweils unmittelbar ringförmig. Insbesondere kann dabei vorgesehen sein, dass durch das Mantelelement ein Einführtrichter für das Medienrohr gebildet ist.

Der Stator weist einen rohrförmigen Spulenträger auf, der, mit Bezug auf die Rotorwelle, eine radial innere Begrenzung des Stators bildet, wobei das Mantelelement unmittelbar an den Spulenträger angrenzend angeordnet ist. Hierdurch ist eine besonders gute und sichere Abdichtung ermöglicht.

Der Spulenträger weist vorzugsweise ein Halteelement, insbesondere ein Rastelement zur Fixierung des Medienrohrs auf. Auf diese Weise ist für die Herstellung der Elektromotoranordnung ermöglicht, dass vor der Bildung des Mantelelements das Medienrohr einfach in die vorgesehene Relativposition zum Spulenträger gebracht wird, dort durch das Halteelement in Position gehalten wird und anschließend durch Umspritzen das Mantelelement gebildet wird. Dies erleichtert die Herstellung der Elektromotoranordnung. Der Spulenträger weist dabei weiterhin vorteilhaft wenigstens eine radial nach außen weisende Rippe auf, wobei das Halteelement an der Rippe ausgebildet ist.

Vorzugsweise weist der Stator weiterhin ein rohrförmiges Rückschlusselement auf, wobei der Spulenträger ein Anlageelement zur Positionierung des Rückschlusselements längs der Rotorwelle und/oder ein Zentrierelement zur Zentrierung des Rückschlusselements mit Bezug auf die Rotorwelle aufweist. Auch hierdurch ist die Herstellung erleichtert. Gegebenenfalls kann das Anlageelement bzw. das Zentrierelement an der Rippe ausgebildet sein.

Vorzugsweise weist der Stator eine Statorwicklung auf, die in Form einer Segmentwicklung über 60° ausgebildet ist. Dies ermöglicht, einen durch die Statorwicklung gebildeten Wickelkopf kleiner zu gestalten, so dass insgesamt der Stator kleiner gestaltet werden kann, insbesondere in radialer Ausrichtung.

Die Erfindung wird im Folgenden anhand von Ausführungsbeispielen und mit Bezug auf die Zeichnungen näher erläutert. Es zeigen:
- Fig. 1: eine Längsschnittskizze eines Stators einer erfindungsgemäßen Elektromotoranordnung,
- Fig. 2: eine perspektivische Ansicht des Stators,
- Fig. 3: eine der Fig. 2 entsprechende Skizze,
- Fig. 4: eine perspektivische Ansicht des Stators mit Mantelelement,
- Fig. 5: eine entsprechende Ansicht aus einer anderen Perspektive,
- Fig. 6: eine Längsschnittskizze durch den Stator mit Mantelelement,
- Fig. 7: eine Querschnittskizze durch den Stator mit Mantelelement gemäß der Markierung A-A in Fig. 6,
- Fig. 8: eine Detailskizze zu Fig. 7, die eine Variante zeigt,
- Fig. 9: eine Seitenansicht einer Variante des Stators ohne Rückschlusselement,
- Figuren 10 und 11: zwei Ansichten des in Fig. 9 gezeigten Stators ohne Rückschlusselement aus unterschiedlichen Perspektiven,
- Fig. 12: eine Ansicht des in Fig. 9 gezeigten Stators (mit Rückschlusselement),
- Fig. 13: eine Querschnittskizze eines Stators, bei der eine Spulenwicklung gemäß H-Wicklung ausgeführt ist und dabei eine Umschlingung von 180° aufweist,
- Fig. 14: eine entsprechende Querschnittskizze, bei der die Spulenwicklung jedoch lediglich eine Umschlingung von 120° aufweist,
- Fig. 15: eine Querschnittskizze mit einer Anordnung ohne Überlagerung von einzelnen Windungen benachbarter Spulen, so dass symmetrische Spulenströme ermöglicht sind,
- Fig. 16: eine Skizze zu einer Abwicklung gemäß Fig. 15,
- Fig. 17: eine Skizze zu einer Dreieckwicklung,
- Fig. 18: eine Längsschnittskizze zu einer Elektromotoranordnung mit einer Lichtquelle,
- Fig. 19: einen Kontaktstab zur elektrischen Kontaktierung der Lichtquelle,
- Fig. 20: ein Halteteil zur Halterung der Lichtquelle,
- Fig. 21: ein Sicherungselement zur Sicherung des Halteteils,
- Fig. 22: eine perspektivische Ansicht des Halteteils,
- Fig. 23: eine Ansicht von Halteteil und Leiterplatte im voneinander getrenntem Zustand,
- Fig. 24: eine Längsschnittskizze zu einer Variante des Halteteils,
- Fig. 25: eine Längsschnittskizze zu einer Elektromotoranordnung mit einer Lichtquelle,
- Fig. 26: eine perspektivische Ansicht der in Fig. 25 dargestellten Elektromotoranordnung,
- Fig. 27: eine perspektivische Ansicht einzelner Teile einer Elektromotoranordnung mit einer Lichtquelle,
- Fig. 28: eine entsprechende Skizze,
- Fig. 29: eine perspektivische Skizze einer Elektromotoranordnung mit einer Lichtquelle an einem Halteteil, das vom Motorgehäuse getrennt ist,
- Fig. 30: eine Längsschnittskizze einer Elektromotoranordnung mit einer Lichtquelle,
- Fig. 31: eine perspektivische Ansicht einer Elektromotoranordnung mit einer Lichtquelle bei separiertem Halteteil und separiertem Sicherungselement,
- Fig. 32: eine Detailansicht aus der Fig. 31,
- Fig. 33: eine weitere Detailansicht der Fig. 31,
- Fig. 34: eine teiltransparente Skizze des Halteteils mit der Lichtquelle,
- Fig. 35: eine der Fig. 34 entsprechende Explosionsdarstellung,
- Figuren 36 bis 38: eine Variante eines Halteteils mit Lichtquelle,
- Fig. 39: eine weitere Variante eines Halteteils mit einer Lichtquelle,
- Fig. 40: eine entsprechende Explosionsdarstellung,
- Figuren 41 bis 44: eine weitere Variante,
- Fig. 45: eine Längsschnittskizze einer Elektromotoranordnung mit einem Kupplungszapfen gemäß der so genannten INTRAmatic Kupplung bzw. gemäß der Norm ISO 3964,
- Fig. 46: eine Ausgestaltung mit einem demgegenüber verkürzten Kupplungszapfen,
- Fig. 47: eine Ausgestaltung, bei der das Motorgehäuse und der Kupplungszapfen einteilig bzw. einstückig ausgebildet sind und
- Fig. 48: das Motorgehäuse mit dem Kupplungszapfen separiert.

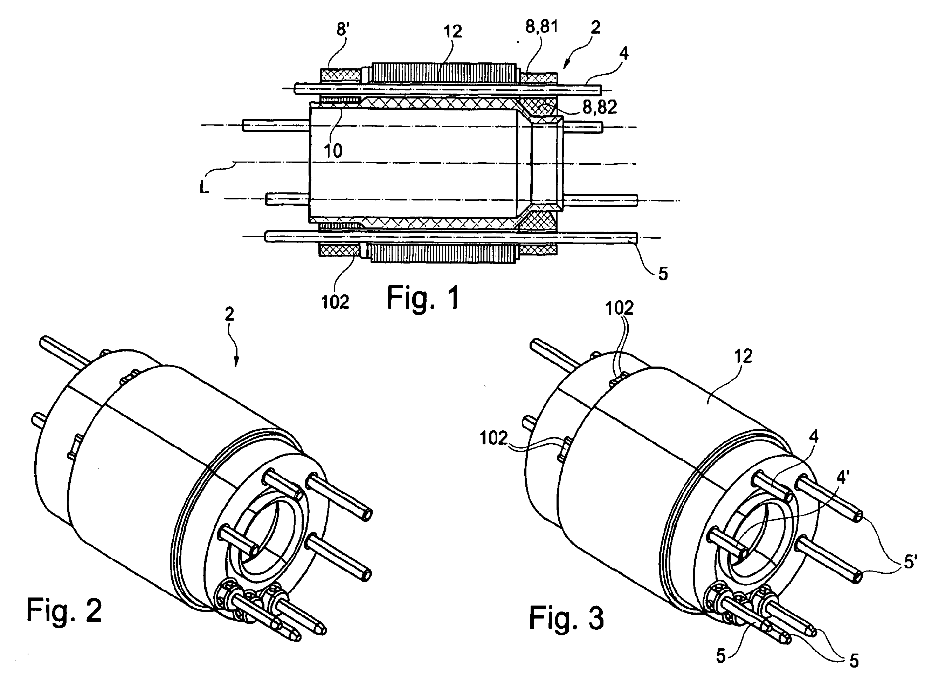

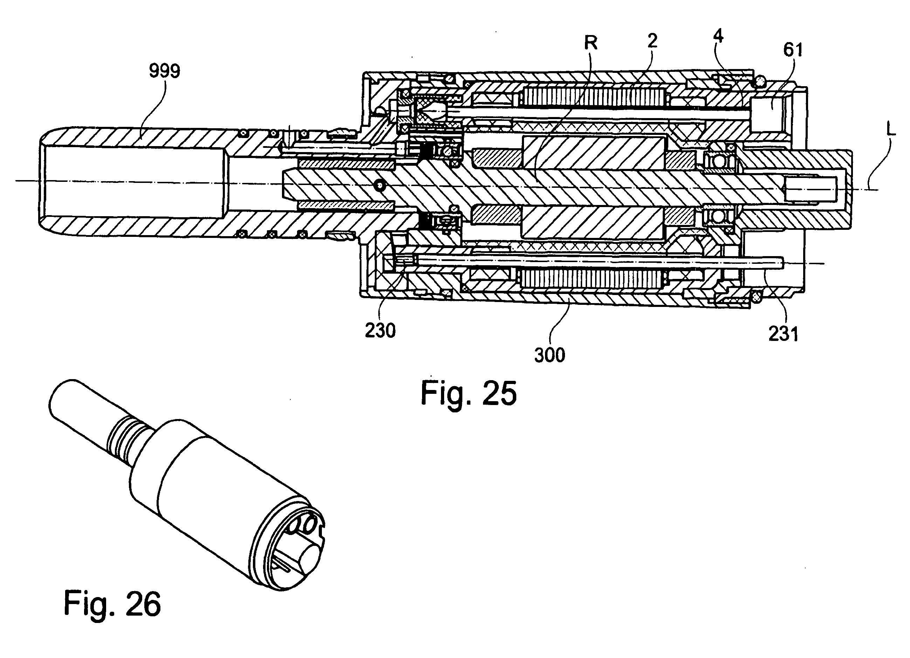

Fig. 1 zeigt eine Längsschnittskizze eines Stators 2 einer erfindungsgemäßen Elektromotoranordnung, Fig. 2 eine entsprechende perspektivische Ansicht des Stators 2 und Fig. 3 eine der Fig. 2 entsprechende Skizzendarstellung. Die Elektromotoranordnung weist weiterhin, wie beispielhaft in Fig. 25 bezeichnet, einen Rotor R mit einer Rotorwelle auf, der jedoch in den Figuren 1 bis 3 aus Gründen der Übersichtlichkeit nicht gezeigt ist. Der Rotor R kann gemäß dem Stand der Technik ausgebildet sein. Die Rotorwelle ist drehbar gelagert angeordnet; in Fig. 1 ist eine Längsachse *L* skizziert, die mit der Drehachse der Rotorwelle identisch ist.

Weiterhin weist die Elektromotoranordnung ein Medienrohr 4 auf. Das Medienrohr 4 ist dazu ausgebildet, ein Medium zu leiten, insbesondere - in Längsrichtung der Rotorwelle betrachtet - von einer Seite der Elektromotoranordnung zur gegenüberliegenden. Bei dem Medium kann es sich beispielsweise um Luft und/oder Wasser oder Licht oder Strom handeln. Das Medienrohr 4 kann sich parallel zur Längsachse *L* des Stators 2 erstrecken.

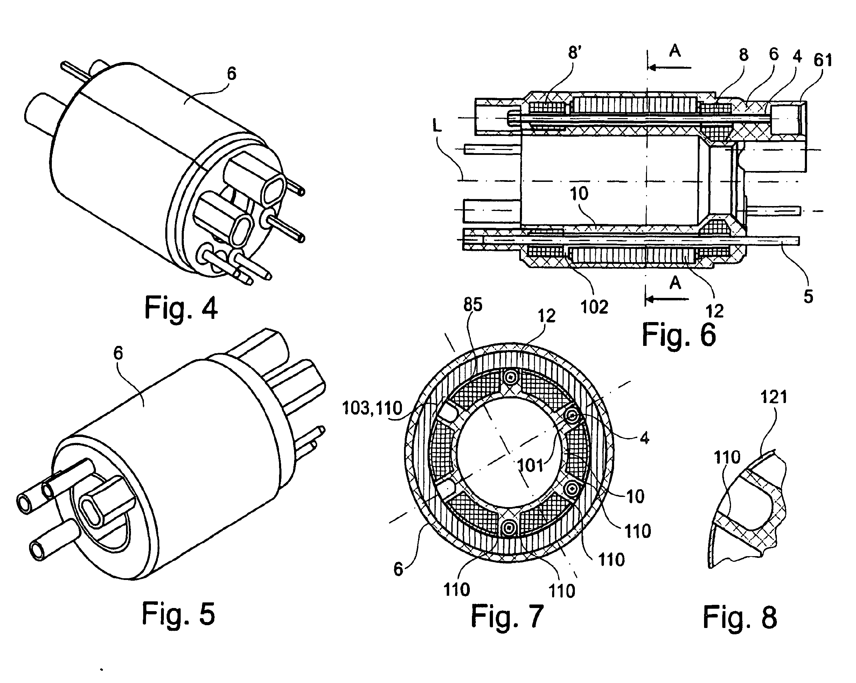

Wie der Längsschnittskizze der Fig. 6 beispielhaft zu entnehmen, weist die Elektromotoranordnung weiterhin ein Mantelelement 6 auf, das durch Umspritzen des Stators 2 gebildet ist. Das Mantelelement 6 umgibt sowohl den Stator 2 als auch das Medienrohr 4 von außen ringförmig geschlossen dicht. Dies geht auch aus der Querschnittskizze der Fig. 7 hervor. In den Figuren 4 und 5 sind zwei Ansichten des Stators 2 mit dem Mantelelement 6 aus unterschiedlichen Perspektiven dargestellt.

Das Mantelelement 6 kann insbesondere aus einem Hochtemperaturpolymer bestehen, beispielsweise aus PEEK, PPS, LCP, PAI, PPSU, PSU oder PES. Das Mantelelement 6 dient zum Schutz des Stators 2, insbesondere im Fall einer Sterilisation.

Der Stator 2 kann eine Statorwicklung, beispielsweise in Form einer Kupferspule, aufweisen, durch die ein beispielhaft in Fig. 1 bezeichneter Wickelkopf 8 gebildet sein kann, wobei vorzugsweise ein erster Teil 81 der Statorwicklung bzw. des Wickelkopfes 8, mit Bezug auf die Rotorwelle bzw. die Längsachse L, radial außerhalb des Medienrohrs 4 angeordnet ist und ein zweiter Teil 82 radial innerhalb. Das Medienrohr 4 lässt sich hierdurch gleichsam in den Stator 2 integrieren, so dass insgesamt eine besonders kompakte Ausgestaltung der Anordnung, insbesondere in radialer Erstreckung, ermöglicht ist. Wie aus Fig. 7 hervorgeht, kann die Statorwicklung einen Abschnitt 85 aufweisen, in dem die Drähte der Statorwicklung parallel zu der Längsachse *L* verlaufend orientiert sind.

Wie in Fig. 6 beispielhaft gezeigt, kann sich das Mantelelement 6 längs der Rotorwelle betrachtet zu beiden Seiten über den Stator 2 hinaus erstrecken. Dabei ist eine besonders gute Abdichtung des Stators 2 möglich, wenn das Mantelelement 6 zu beiden Seiten des Stators 2 das Medienrohr 4 unmittelbar ringförmig allseits abdichtend umgibt. Dabei kann vorteilhaft durch das Mantelelement 6 ein Einführtrichter 61 für das Medienrohr 4 gebildet sein. Dies erleichtert eine Einführung des Mediums in das Medienrohr 4.

Der Stator 2 weist einen rohrförmigen Spulenträger 10 auf, der, mit Bezug auf die Rotorwelle bzw. auf die Längsachse *L*, eine radial innere Begrenzung des Stators 2 bildet, wobei das Mantelelement 6 unmittelbar an den Spulenträger 10 angrenzend angeordnet ist. Insbesondere kann das Mantelelement 6 derart durch Umspritzen gebildet sein, dass es beim Umspritzen auf dem Spulenträger 10 aufgebracht wird.

Wie in den Figuren 1 und 6 gezeigt, kann vorgesehen sein, dass, längs der Rotorwelle bzw. der Längsachse *L* betrachtet, die beiden seitlichen Begrenzungen des Stators 2 jeweils durch einen Wickelkopf 8, 8'gebildet sind, und außerhalb dieser beiden Begrenzungen bzw. Wickelköpfe 8, 8' das Mantelelement 6 unmittelbar abdichtend an dem Spulenträger 10 angeordnet ist.

Der Spulenträger 10 weist vorzugsweise ein Halteelement 101, zweckmäßig in Form eines Rastelements, zur Fixierung des Medienrohrs 4 auf. Hierdurch kann insbesondere beim Vorgang des Umspritzens das Medienrohr 4 in der vorgesehen Relativposition gegenüber dem Spulenträger 10 gehalten werden.

Weiterhin weist der Stator 2 vorteilhaft ein rohrförmiges Rückschlusselement 12 auf, das vorzugsweise den Spulenträger 10 ringförmig umgibt. Das Rückschlusselement 12 (im Folgenden auch kurz als "Rückschluss" 12 bezeichnet) kann insbesondere aus einem weichmagnetischen Material gebildet sein. Der Spulenträger 10 kann in diesem Fall ein, beispielhaft in Fig. 6 bezeichnetes, Anlageelement 102 zur Positionierung des Rückschlusselements 12 längs der Rotorwelle bzw. der Längsachse L aufweisen. Beispielsweise kann das Anlageelement 102 als Längsanschlag ausgestaltet sein.

Außerdem kann der Spulenträger 10 ein Zentrierelement 103 aufweisen, das zur Zentrierung des Rückschlusselements 12 mit Bezug auf die Rotorwelle bzw. mit Bezug auf die Längsachse *L* dient.

Wie bei dem hier gezeigten Ausführungsbeispiel der Fall, weist der Spulenträger 10 vorzugsweise mehrere, insbesondere sechs radial nach außen weisende Doppelstege 110 auf, die sowohl dazu ausgebildet sind, als Halteelement 101 zur Fixierung des Medienrohrs 4 wirken zu können, als auch als Zentrierelement 103 zur Zentrierung des Rückschlusselements 12. Außerdem können sie einen radial nach außen weisenden erhöhten Abschnitt aufweisen, der das Anlageelement 102 bildet.

Die Elektromotoranordnung kann außerdem wenigstens ein, beispielhaft in Fig. 3 bezeichnetes, weiteres Medienrohr 4' aufweisen, wobei die Elektromotoranordnung mit Bezug auf das weitere Medienrohr 4' vorzugsweise analog ausgebildet ist zu der Ausbildung mit Bezug auf das zuerst genannte Medienrohr 4.

Die Elektromotoranordnung kann außerdem elektrische Kontaktstäbe 5 (im Folgenden auch kurz als Kontakte 5 bezeichnet) zur elektrischen Kontaktierung des Stators 2 und/oder weitere elektrische Kontaktstäbe 5' zur elektrischen Kontaktierung einer Lichtquelle, beispielsweise einer LED (lichtemittierende Diode) aufweisen. Die Anordnung der Kontaktstäbe 5 und der weiteren Kontaktstäbe 5' kann analog zur Anordnung des Medienrohrs 4 gestaltet sein. Ein Kontaktstab 5, 5' kann also entsprechend durch den Wickelkopf 8 geführt sein usw.

Insbesondere kann die Elektromotoranordnung mit dem Stator 2 gemäß der folgenden Darstellung ausgestaltet sein:
Gemäß der Erfindung lässt sich mithin ein kleiner, hermetisch dichter, kompakter, sterilisationsfähiger Stator 2 angeben, bei welchem neben Kupferspule und weichmagnetischem Rückschluss 12 auch die Medienrohre 4, 4' sowie die elektrischen Anschlüsse 5' für die Lichtquelle umspritzt sind, wobei die Medienrohre 4, 4' und elektrischen Anschlüsse 5' für die Lichtquelle durch die Statorwicklung geführt werden, und an den Stirnseiten des Stators 2 aus diesem austreten, wobei deren Austrittsposition mit den Positionen der bestehenden Anschlussstecker im Versorgungsschlauch korreliert. Die Medienrohre 4, 4' und elektrischen Kontakte 5 sollten dabei vom Stator-Mantelmaterial bis auf die Anschlussöffnungen vollständig umhüllt sein.

Hierzu wird ein Stator 2 vorgeschlagen, der wie folgt gestaltet ist.

Der mit Hochtemperaturpolymer (z.B. PEEK, PPS, LCP, PAI, PPSU, PSU, PES) umspritzte Stator 2 bildet einen kompakten, dichten, sterilisationsbeständigen Körper, der die Motorwicklung, den weichmagnetischen Rückschluss 12, die Medienrohre 4, 4' und elektrischen Kontaktstäbe 5, 5' beinhaltet, dessen Innendurchmesser durch den Spulenträger 10 gebildet wird und an dessen Stirnflächen Buchsen ausgebildet sind, welche mit den Medienrohren 4, 4' verbunden sind und aus dessen Stirnflächen die elektrischen Kontaktstäbe 5, 5' bzw. elektrische Kontaktbuchsen ragen.

Die Ausführung der Spulenwicklung ist vorzugsweise wie folgt.

Der Spulenträger 10 besteht aus einer Hülse mit am äußeren Umfang aufgesetzten Doppel-Trennstegen 101 (im Folgenden auch als doppelwandige Trennstege 101 bezeichnet) zur Trennung der einzelnen Fasen in 60° (3-Phasen) Anordnung. Die Doppel-Trennstege 101 sind mit einer Erhöhung versehen, die ein Anlageelement 102 bildet, welches die axiale Position des magnetischen Rückschlusses 12 vorgibt. Zwischen den Doppel-Trennstegen 101 ist die Kupferwicklung angeordnet. Am äußeren Umfang stützen und Zentrieren die Trennstege 101 den weichmagnetischen Rückschluss 12.

Bei einer besonderen, in Fig. 8 angedeuteten, Ausführungsform tauchen die Trennstege 101 in Ausnehmungen einer den weichmagnetischen Rückschluss 12 tragenden (Kunststoff-)Hülse 121 ein und zentrieren den Rückschlussring 12 direkt an dessen Innendurchmesser.

Innerhalb der Doppel-Trennstege 101 sind die Medienrohre 4, 4' und elektrischen Kontaktstäbe 5, 5' angeordnet. Hierüber erfolgt die Versorgung des aufgesetzten Instruments bzw. Handstücks mit Spray-Wasser und Sprayluft aber auch die elektrische Versorgung der Lichtquelle vom Versorgungsschlauch-Anschluss aus, wenn die Elektromotoranordnung mit den entsprechenden Komponenten verbunden ist.

Die Medienrohre 4, 4' bzw. Kontaktstäbe 5, 5' werden vor dem Umspritzen des kompletten Stators 2 in die Doppel-Trennstege 101 eingeklippst und ausgerichtet. In Verlängerung der Medienrohre / Kontaktstäbe 4, 4', 5, 5' sind an beiden Planseiten des Stators 2 rohrartige Verlängerungen bzw. zylindrische Ausnehmungen am Stator 2 eingebracht, über welche die fluidische und elektrische Kontaktierung mit dem Medienanschluss im Versorgungsschlauch einerseits als auch der motorinternen Weiterleitung erfolgt.

Die Medienrohre 4, 4' und Kontaktstäbe 5, 5' sind vorzugsweise gerade ohne Knick und Kröpfung ausgeführt. Die Medienrohre 4, 4' haben vorzugsweise keine separaten Einführtrichter bzw. Buchsen an ihren Enden bzw. angeformt. Die Einführtrichter 61 bzw. Buchsen sind direkt am Statorkörper beim Umspritzen mit angeformt.

Hierbei ist Variante denkbar. Die Wicklung wird mit einwandigen, massiveren Trennstegen aufgebracht. Die Medienrohre 4, 4' werden in die Zwischenräume zweier angrenzender Wickelstränge eingeschoben und so die Wickelstränge auch beim anschließenden Umspritzen exakt auf Position gehalten. Damit lassen sich auch die drei Phasenströme in engeren Grenzen realisieren, was eine geringere Motorerwärmung zur Folge hat.

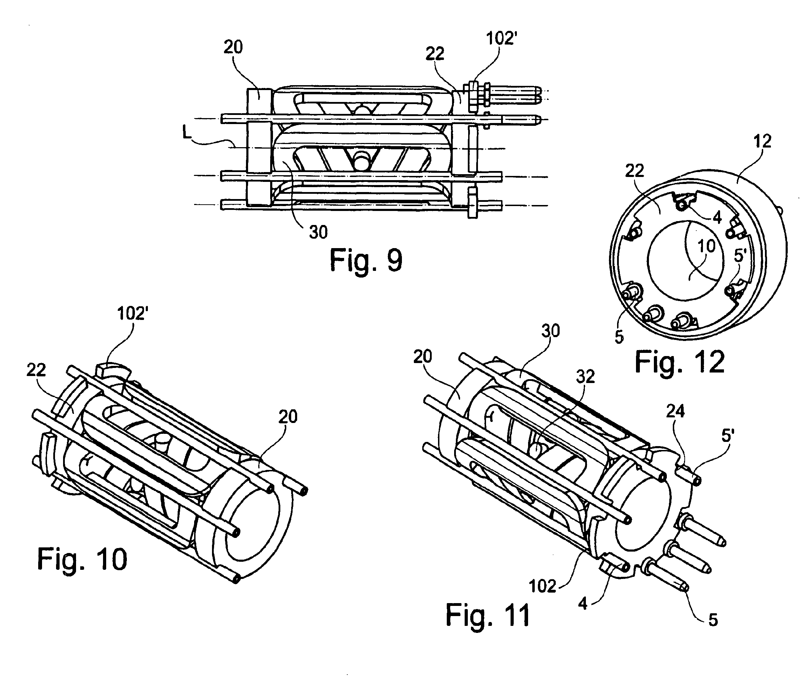

In den Figuren 9 bis 12 ist eine Variante des Stators 2 gezeigt. Die Bezugszeichen sind analog verwendet. Fig. 9 zeigt eine Seitenansicht auf den Stator 2 bei entferntem Rückschlusselement 12; die Figuren 10 und 11 zeigen entsprechende perspektivische Ansichten. Fig. 12 zeigt eine perspektivische Ansicht des Stators 2 mit Rückschlusselement 12.

Bei dieser Variante weist der Spulenträger 10 zwei radial nach außen weisende Rippen 20, 22 auf, die eine seitliche Begrenzung für die Statorwicklung darstellen. Die Rippen 20, 22 weisen Halteelemente 24, vorzugsweise in Form von Rastelementen zur Fixierung der Medienrohre 4, 4' bzw. Kontaktstäbe 5, 5' auf. An einer der beiden Rippen, im gezeigten Fall an der Rippe 22, kann eine Variante des Anlageelements 102' zur Längsausrichtung des Rückschlusselements 12 angeformt sein; diese kann wiederum insbesondere als Montagehilfe beim Umspritzen dienen. Weiterhin können die Rippen 20, 22 ein Zentrierelement aufweisen bzw. als ein solches ausgebildet sein, das zur Zentrierung des Rückschlusselements 12 dient.

Die Statorwicklung kann als Dreieckwicklung ausgeführt sein; insbesondere können sechs Dreieckspulen 30 als Statorwicklung vorgesehen sein. Insbesondere kann folgende Ausgestaltung vorgesehen sein:
Eine Fixierung der Dreieckspulen 30 erfolgt auf einem rohrförmigen Spulenkörper bzw. Spulenträger 10, welcher nahe den beiden Enden eine umlaufende Rippe 20, 22 aufweist, die in 60° Teilung Aussparungen aufweist, in welche die Medienrohre 4, 4' und elektrischen Kontaktstäbe 5, 5' eingeklipst sind. Die Dreieckspulen 30 werden zwischen den beiden umlaufenden Rippen 20, 22 angeordnet und die Anschlüsse verschaltet und mit Kontakten versehen. Auch die Kontakte 5 zum elektrischen Anschluss der drei Motorphasen können in wenigstens einer der beiden umlaufenden Rippen 20, 22, vorzugsweise in beiden Rippen 20, 22 eingeklipst sein.

Zur exakten Positionierung der Dreieckspulen 30 sind auf der Mantelfläche des Spulenträgers 10 Poller 32 angeordnet, in welche die Dreieckspulen 30 eingehängt werden. Alternativ kann hierzu eine Anlagekante vorgesehen sein. Die Dreieckspule 30 befindet sich direkt auf der Mantelfläche des Spulenträgers 10 und wird in dieser Lage angeformt und verbacken. In der Kante am Übergang von einer Dreieckspule 30 zur benachbarten werden die Medienrohre 4, 4' positioniert. Diese liegen somit über den Dreieckspulen 30 und halten Letztere auf dem Spulenträger 10.

Die Zentrierung des magnetischen Rückschlusses 12 zum Kern bzw. zum Spulenträger 10 kann über die am Umfang angeordneten Medienrohre 4, 4' erfolgen, wird aber vorteilhafter, insbesondere genauer, über die beiden umlaufenden Rippen 20, 22 ausgeführt, auf welchen das Rückschlusspaket 12 aufliegt und auch axial über einen Anschlag 102, beispielsweise in Form eines Bunds oder Flansches, gehalten wird. Damit wird auch eine Positionsveränderung der eingeklipsten Medienrohre 4, 4' beim nachfolgenden Umspritzprozess verhindert.

Der komplett vormontierte Stator 2 kann somit einfach in ein heißes Spritzwerkzeug eingelegt werden: Alle Anschlüsse sind vorfixiert und müssen nicht umständlich im heißen Werkzeug in Aufnahmen eingefügt werden.

Ein Teilaspekt der erfindungsgemäßen Elektromotoranordnung bzw. des erfindungsgemäßen Kleinmotors betrifft den Stator. Es ist ein Stator mit Segementwicklungen für Dreiphasenmotoren bekannt, der Phasenstränge aufweist, die als Spule auf einen Spulenkörper gewickelt werden oder die als Einzelspule z. B. in Dreieck-Form separat gewickelt und geformt werden und anschließend auf einem Spulenträger fixiert werden.

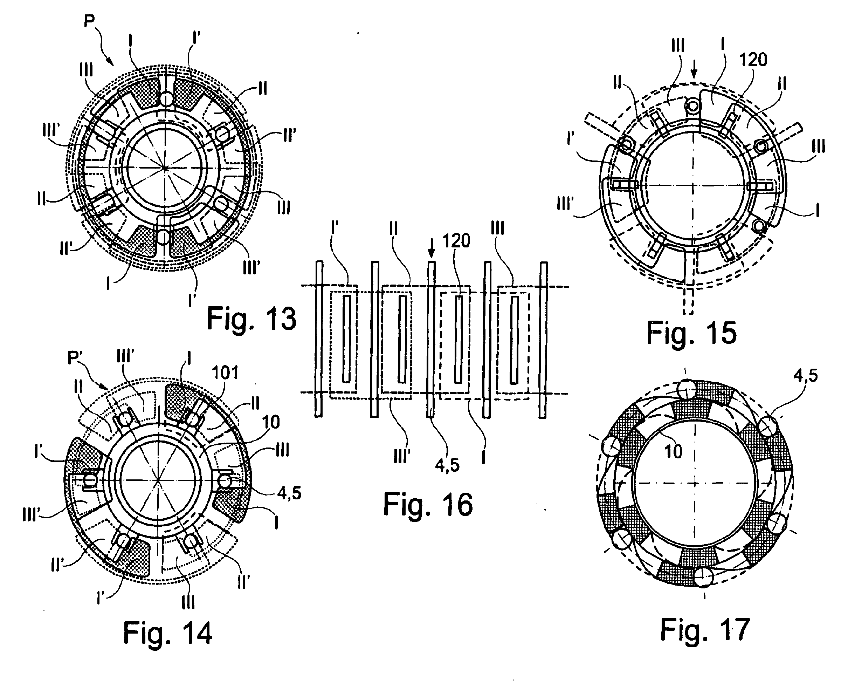

Bei Spulenwicklungen werden die an den Spulenenden vorhandenen Drahtschlaufen zu einem Wickelkopf geformt. Bei der üblichen H-Wicklung, bei welcher der jeweilige Spulenstrang die größte Fläche umschließt, liegen an den Spulenenden dabei drei Stränge übereinander. Dies ist in der Querschnittdarstellung der Fig. 13 illustriert; die Spulenstränge sind mit den römischen Ziffern *I, I*', *II, II III, III'* bezeichnet. Man erkennt, dass beispielswiese an der mit dem Pfeil *P* bezeichneten Stelle die drei Spulenstränge *I, III* und *II* radial übereinander angeordnet sind, und zwar in dieser Reihenfolge von innen nach außen. Für kurze, kompakte Motoren werden diese Drahtschlaufen zu einem Wickelkopf geformt. Bei drei Strängen entsteht deshalb ein relativ großer Wickelkopf.

Vorzugsweise ist daher die Spulenwicklung als Segmentwicklung über 60° (anstatt 120°) ausgeführt. Dies ist in Fig. 14 entsprechend illustriert. Die umschlossene, von Feldlinien durchdrungene Fläche wird damit zwar kleiner, allerdings sind im Wickelkopf nur noch zwei Stränge überlagert, wodurch der Wickelkopf leichter umgeformt werden kann und deutlich kleiner ausfällt. Beispielsweise sind an der mit dem Pfeil *P*' bezeichneten Stelle lediglich die beiden Spulenstränge *III*' und *II* radial übereinander angeordnet, und zwar in dieser Reihenfolge von innen nach außen. Dies ist insbesondere von besonderem Vorteil, wenn durch den Wickelkopf auch noch Medienrohre 4, 4' und elektrische Kontaktstäbe 5, 5' geführt werden.

Diese Durchleitungen bzw. Medienrohre 4, 4' bzw. Kontaktstäbe 5, 5' können, wie beispielhaft in Fig. 14 gezeigt, analog zur obigen Darstellung in doppelwandigen Trennstegen 101 angeordnet sein, die sich radial von einem Spulenträger 10 nach außen erstrecken.

Die Medienrohre 4, 4' bzw. Kontaktstäbe 5, 5' können aber auch zwischen zwei angrenzenden Wickelsträngen platziert werden. Dies ist beispielhaft in Fig. 15 gezeigt; Fig. 16 zeigt skizzenartig einen Abschnitt einer Abwicklung der Anordnung gemäß Fig. 15. Dabei ist zur leichteren Orientierung jeweils in den Figuren 15 und 16 ein Medienrohr 4 bzw. Kontaktstab 5 mit einem kleinen Pfeil markiert. Beispielsweise ergibt sich mit Bezug auf Fig. 16, dass an das mit dem Pfeil markierte Medienrohr 4 bzw. an den Kontaktstab 5 von rechts der Wickelstrang *I* unmittelbar angrenzt und von links der Wickelstrang *III*'.

Bei Anordnung zwischen zwei Wickelsträngen werden die Medienrohre bzw. Kontaktstäbe exakt auf Position gehalten, ohne dass sich beim nachfolgenden Umspritzen Wickeldrähte aus benachbarten Strängen überlappen können und elektrische Verluste entstehen. Bei Anordnung zwischen den Wickelsträngen lässt sich der Wickelkopf leichter formen.

Der Spulenträger 10 kann, wie in den Fig. 15 angedeutet, sechs radial nach außen weisende Stege 120 aufweisen, die so angeordnet sind, dass jeweils zwei benachbarte Stege 120 einen Winkel von 60° einschließen. Die Stege 120 können sich insbesondere parallel zur Längsachse *L* erstrecken und jeweils mittig zwischen zwei doppelwandigen Trennstegen 101 angeordnet sein. Auf diese Weise lassen sich die Wickelstränge besonders gut platzieren. Bei dieser Ausgestaltung können somit die Medienrohre 4, 4' bzw. Kontaktstäbe 5, 5' jeweils mittig zwischen zwei Stegen 120 angeordnet sein.

Bei der in Fig. 15 gezeigten Ausgestaltung ergeben sich keine Überlagerungen von einzelnen Windungen benachbarter Spulen. Daher können sich symmetrische Spulenströme ausbilden. Die Spalte zwischen zwei benachbarten Spulen bzw. Wickelsträngen können durch Medienrohre 4, 4' bzw. Kontaktstäbe 5, 5' ausgefüllt werden; hierdurch lassen sich die Spulen bzw. Wickelstränge besonders gut in der gewünschten Form bzw. Position halten; sie liegen gleichsam am idealen geometrischen Ort.

Zum Vergleich ist in Fig. 17 die Anordnung von dreieckförmigen Strängen skizziert, entsprechend der Ausführung, die in den Figuren 9 bis 11 gezeigt ist.

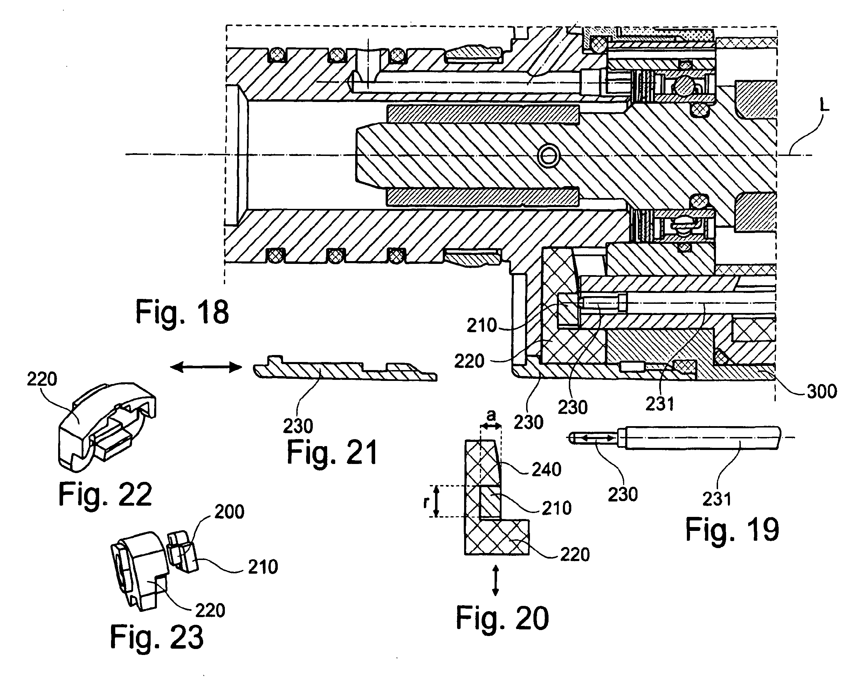

Eine Elektromotoranordnung mit einer Lichtquelle lässt sich besonders kurz gestalten, wenn die Lichtquelle eine LED aufweist, die auf einem Trägerelement für elektronische Bauteile angeordnet ist, beispielswiese auf einer flachen Platine, wobei das Trägerelement derart angeordnet ist, dass seine Erstreckung mit Bezug auf die Längsachse *L* in radialer Richtung größer ist als seine Erstreckung in axialer Richtung. Ein Ausführungsbeispiel hierzu ist in den Figuren 18 bis 20 skizziert. Fig. 18 zeigt dabei einen Ausschnitt einer Längsschnittskizze mit dem Trägerelement 210, hier in Form einer flachen Platine. Zweckmäßig ist ein Halteteil 220 vorgesehen, das zur Halterung der Lichtquelle bzw. der LED 200 dient. Insbesondere kann das Trägerelement 210 an dem Halteteil 220 angeordnet sein.

In Fig. 20 ist das Halteteil 220 und das Trägerelement 210 in separiertem Zustand gezeigt, wobei die Orientierung zur Längsachse *L* - wie durch den Doppelfeil symbolisch angedeutet - entsprechend der Fig. 18 beibehalten ist. Wie aus den Figuren 18 und 19 beispielhaft hervorgeht, ist das Trägerelement 210 derart angeordnet, dass seine Erstreckung mit Bezug auf die Längsachse *L* in radialer Richtung größer ist als seine Erstreckung in axialer Richtung a. Vorzugsweise ist auch das Halteteil 220 derart angeordnet, dass seine Erstreckung in radialer Richtung größer ist als seine Erstreckung in axialer Richtung.

Weiterhin ist zweckmäßig eine Lageranordnung vorgesehen, durch die das Halteteil 220 verschiebbar gelagert ist, vorzugsweise mit Bezug auf die Längsachse *L* radial verschiebbar gelagert, also in Richtung des in Fig. 20 skizzierten Doppelpfeils. Vorzugsweise ist die Lageranordnung an einem Motorgehäuse 300 der Elektromotoranordnung ausgebildet. Insbesondere kann die Lageranordnung derart gestaltet sein, dass das Halteteil 220 von der restlichen Elektromotoranordnung gelöst werden kann und anschließend wieder in die Lageranordnung eingeführt werden kann.

Vorzugsweise ist weiterhin ein Sicherungselement 230 vorgesehen, beispielsweise in Form eines Ringelements, das sich ringförmig um die Längsachse *L* erstreckt und das zur Sicherung des Halteteils 220 gegenüber einer Bewegung längs der Lageranordnung dient. Hierdurch lässt sich das Halteteil 220 in seiner vorgesehenen Relativposition zur restlichen Elektromotoranordnung fixieren.

Zur elektrischen Kontaktierung der LED 200 ist vorteilhaft ein Kontaktstift 230 vorgesehen, der federnd gelagert ist, beispielsweise an einem Kontaktstab 231. Der Kontaktstab 231 kann gemäß der obigen Beschreibung mit Bezug auf den ersten Aspekt der Erfindung, als Kontaktstab 5 ausgebildet sein, der durch das Mantelelement 6 umschlossen und so in den Stator 2 integriert ist.

Das Halteteil 220 weist vorzugsweise eine schräge Fläche 240 auf, wobei die Elektromotoranordnung derart ausgestaltet ist, dass bei einer Bewegung des Halteteils 220 längs der Lageranordnung der Kontaktstift 230 durch die schräge Fläche 240 entgegen seiner federnden Lagerung gedrückt wird. Hierdurch lässt sich eine besonders gute elektrische Kontaktierung der LED 200 ermöglichen.

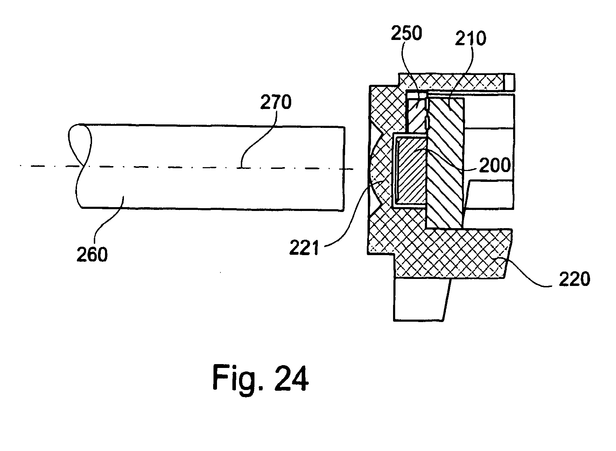

In Fig. 24 ist eine Variante gezeigt; wie aus dieser Darstellung hervorgeht, kann das Halteteil 220 ein optisches Element 221 aufweisen, beispielsweise in Form einer Fokussier-Linse. Hierdurch lässt sich ein von der LED 200 abgegebenes Licht effektiv in einen Lichtleiter 260 einkoppeln, der in dem Handstück angeordnet ist und der dazu ausgebildet ist, das Licht zu einer Bearbeitungsstelle des Handstücks zu leiten. Das optische Element 221 kann als integraler Teil des Halteteils 220 ausgestaltet sein oder von dem Halteteil 220 gefasst sein.

Die Anordnung kann insbesondere wie im Folgenden näher dargestellt, ausgeführt sein:
Ein Ansatz zur Verkürzung der Länge des Dentalmotors ist somit die Anordnung der Lichtquelle mit ihrer Hauptausdehnung quer zur Motorachse bzw. Längsachse L. Dies wird vorzugsweise über eine SMD-LED 200 realisiert, welche auf einer flachen Leiterplatte bzw. Platine angeordnet ist, deren Hauptausdehnung quer zur Motorachse ist.

Die Leiterplatte mit LED 200 und eventuell erforderlicher elektrischer Beschaltung befindet sich in/an einem Halteteil 220. Das Halteteil 220 weist in Verlängerung der Hauptabstrahlrichtung der LED 200 ein angeformtes bzw. gefasstes optisches Element 221 auf, welches das LED-Licht in den winkelstückseitigen Glasfiberstab bzw. Lichtleiter 260 einkoppelt. Das Halteteil 220 wird radial in eine Ausnehmung am Motorgehäuse 300 eingeschoben und durch ein Sicherungselement 230 in Form eines Überwurfrings fixiert.

Die SMD-LED 200 wird auf einem Trägerelement 210, z. B. in Form einer Leiterplatte platziert und elektrisch kontaktiert (z. B. durch Löten, Klemmen, leitfähig Kleben, Wire-Bonden). Zur Vermeidung von Überhitzung wird der Diodenstrom durch einen, beispielhaft in Fig. 24 bezeichneten, Vorwiderstand 250 begrenzt. Dieser dient gleichzeitig zur Anpassung der Beleuchtungsstärke an unterschiedliche LED-Güten, sowie an die unterschiedlichen Versorgungsspannungen in diversen Ansteuereinheiten (Dentaleinheiten/Steuergeräten).

Der Vorwiderstand 250 ist auf demselben Trägerelement 210 bzw. auf derselben Leiterplatte angeordnet wie die LED 200. Das Leiterplattensubstrat besteht idealerweise aus einem gut wärmeleitenden Werkstoff wie Keramik, gefülltem Kunststoff, FR4 mit Metalleinlage als Wärmesenke usw. In der Leiterplatte sind vorzugsweise Durchgangsbohrungen angebracht, durch welche eine Kühlluft, insbesondere die Motor-Kühlluft geleitet werden kann und somit auch die SMD-LED 200 kühlt.

Die Leiterplatte mit den aufgelöteten Bauteilen (LED, Widerstand) wird durch ein vorzugsweise transparentes Halteteil 220 gefasst, das beispielsweise aus Kunststoff oder Glas besteht (überdeckt, gehalten), welches in Verlängerung der optischen Achse 270 der SMD-LED 200 eine Fokussier-Linse aufweist, über welche das LED-Licht in den Glasfiberstab bzw. Lichtleiter 260 im Hand- Winkelstück einkoppelt wird. Das Halteteil 220 weist an der Außenkontur Führungsflächen auf, über welche die komplette Lichtquelle (SMD-LED 200 plus Leiterplatte plus Halteteil 220) im Motorgehäuse 300 ausgerichtet wird.

Die Lichtquelle wird radial in eine am Motorgehäuse 300 angebrachte Aussparung wie eine Schublade eingesetzt. Ein Überwurfring bzw. Sicherungselement 230 fixiert die Lichtquelle in der vorgegebenen Position. Durch den vorzugsweise metallischen Überwurfring wird auch das seitliche Austreten von Streulicht aus dem transparenten Halteteil 220 verhindert.

Auf der Unterseite bzw. einer der LED 200 gegenüberliegenden Seite des Trägerelements 210 bzw. der Leiterplatte sind Kontaktflächen angebracht. Beim radialen Einschieben der Lichtquelle in das Motorgehäuse 300 werden über eine schräge Fläche 240 oder kurz Schräge 240 am Halteteil 220 oder an der Leiterplatte federnde Kontaktstifte 230 im Motor gespannt. Diese stellen mit den Kontaktflächen auf der Unterseite der Leiterplatte die elektrische Verbindung zum Versorgungsschlauch-Anschluss dar. Die Federkontakte 230 sind in elektrisch leitende Hülsen eingesetzt welche mit den schlauchseitigen Steckkontakten verbunden sind.

Im Gegensatz zu einer Halogenlampe, welche sich längs der Motorachse erstreckt, ist die Hauptausdehnung der LED-Lichtquelle quer zur Motorachse. Damit wird eine deutliche Längenreduktion des Dentalmotors erzielt.

In Fig. 25 ist eine Längsschnittskizze einer Elektromotoranordnung gezeigt, bei der sowohl der erste Aspekt der Erfindung ("Mantelelement"), als auch der zweite Aspekt der Erfindung ("LED auf Trägerelement") realisiert ist. Bezeichnet ist hier der Rotor R der Elektromotoranordnung, der drehbar um eine Längsachse *L* gelagert ist. Fig. 26 zeigt eine entsprechende perspektivische Ansicht.

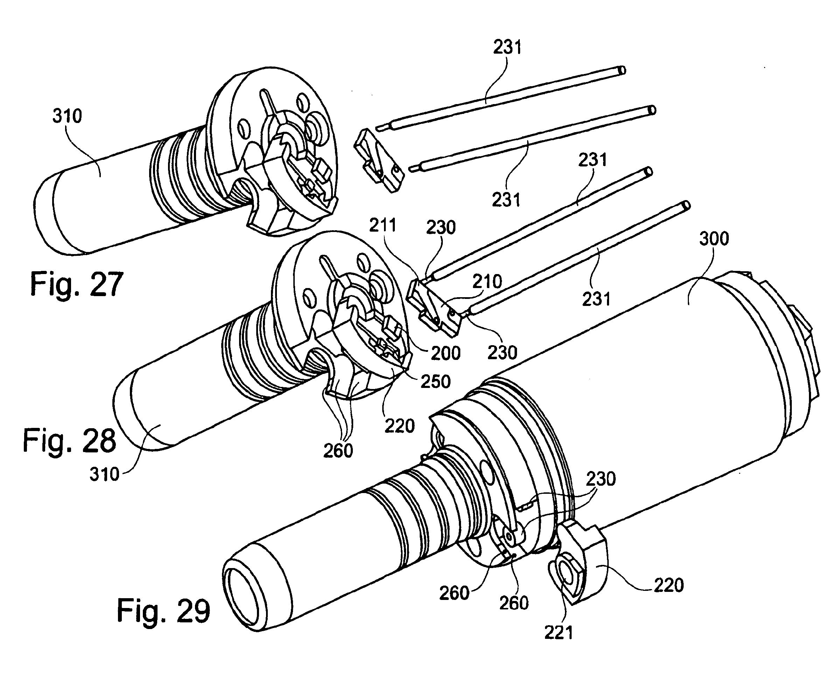

In den Figuren 27 bis 29 ist in perspektivischer Form die Anordnung gemäß dem Ausführungsbeispiel weitergehend illustriert. Dabei sind zwei Kontaktstäbe 231 zu erkennen und dementsprechend zwei federnd gelagerte Kontaktstifte 230 zur elektrischen Kontaktierung der LED 200. Mit dem Bezugszeichen 211 sind Kontaktflächen bezeichnet, die auf dem Trägerelement 210 zur Kontaktierung mit den Kontaktstiften 230 ausgebildet sind.

Mit dem Bezugszeichen 260 ist eine Ausnehmung bezeichnet, die im Motorgehäuse 300 zur Aufnahme des Halteteils 220 ausgebildet ist.

Mit dem Bezugszeichen 310 ist ein Kupplungszapfen bezeichnet, der als Kupplungselement zur Verbindung mit dem Handstück ausgebildet ist.

Eine LED muss mit einer bestimmten Polung betrieben werden. Bei falscher Polung leuchtet die Chip-LED nicht bzw. es leuchtet eine gegebenenfalls vorhandene parallel geschaltete Schutzdiode rot. Dentale Einheiten und Ansteuergeräte sind in großer Anzahl und Varianz im Feld installiert. Die Polung für die Instrumentenbeleuchtung ist dabei nicht definiert. Um bei einem Benutzer der Elektromotoranordnung eine leicht durchführbare Umpolung der LED 200 zu ermöglichen, sind die Lageranordnung und das Halteteil 220 vorzugsweise derart ausgebildet, dass das Halteteil 220 in zwei unterschiedlichen Ausrichtungen von außerhalb in die Lageranordnung eingeführt und anschließend wie vorgesehen längs der Lageranordnung verschoben werden kann. Hierdurch lässt sich die Anordnung so gestalten, dass im Fall einer falsch gepolten Kontaktierung der LED 200 durch Wechseln der Ausrichtung des Halteteils 220 die richtige Polung hergestellt werden kann.

Beispielsweise kann die Anordnung so gestaltet sein, dass sich das Halteteil 220 durch Verschieben längs der Lageranordnung von der restlichen Elektromotoranordnung trennen lässt, dann um 180° drehen lässt und in der so neu eingenommen Orientierung wieder in die Lageranordnung einschieben lässt, bis eine Kontaktierung in der entsprechend anderen Polung erreicht ist.

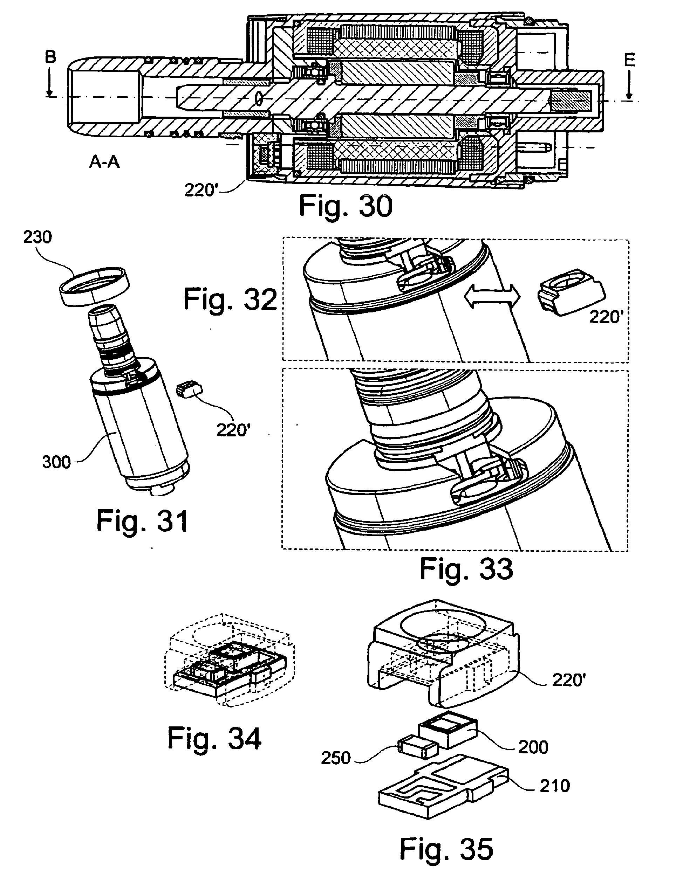

In den Figuren 30 bis 35 ist eine Variante gemäß dieser Ausgestaltung dargestellt. In Fig. 30 ist eine Längsschnittskizze gezeigt, in Fig. 31 eine perspektivische Ansicht und in den Figuren 32 und 33 Details aus der Fig. 31. Insbesondere erkennt man das Sicherungselement 230 in Form eines Überwurfrings und das Halteteil 220' gemäß dieser Variante. Wie beispielsweise aus Fig. 32 hervorgeht, ist das Halteteil 220' symmetrisch ausgebildet, so dass es sich in zwei unterschiedlichen Ausrichtungen in die Lageranordnung im Motorgehäuse 300 einschieben lässt, wobei die beiden Ausrichtung durch eine Drehung um 180°, insbesondere um eine Drehachse parallel zur optischen Achse 270 der LED 200, ineinander überführen lassen.

In Fig. 34 ist das Halteteil 220' in halbtransparenter Form dargestellt, Fig. 35 zeigt eine entsprechende Explosionsdarstellung.

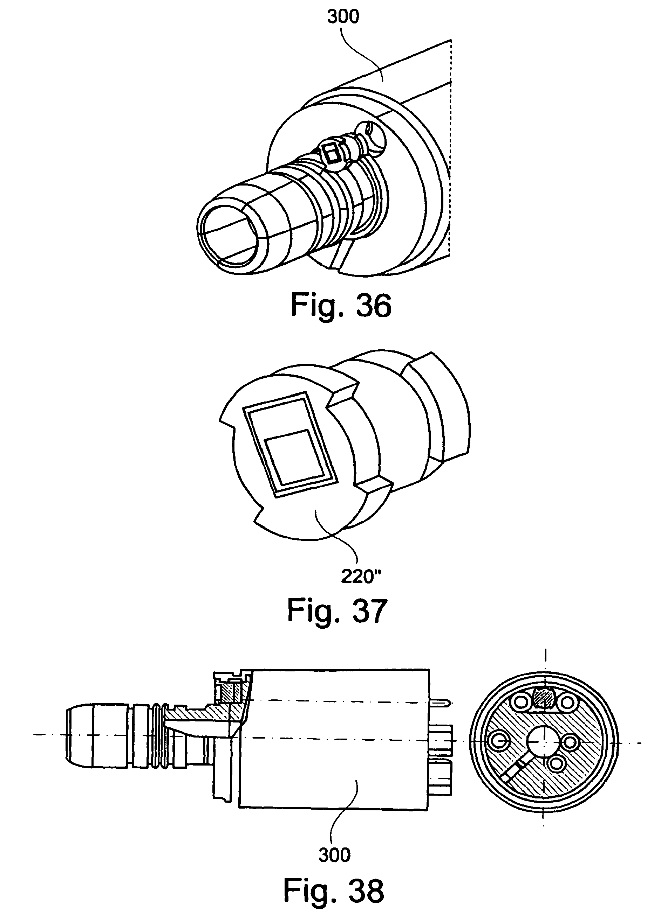

In den Figuren 36 bis 38 ist eine Ausführung skizziert, bei der sich das Halteteil 220" in axialer Richtung in das Motorgehäuse 300 einsetzen lässt.

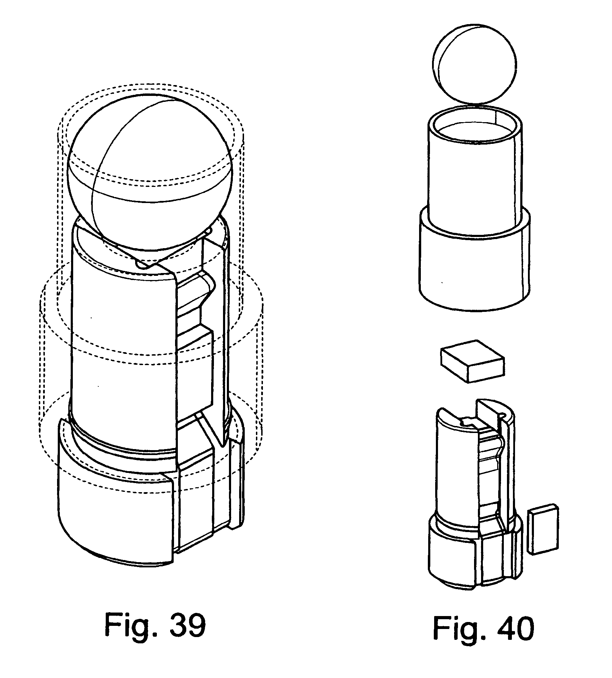

In den Figuren 39 und 40 sind weitere Ausgestaltungen eines Halteelements gezeigt.

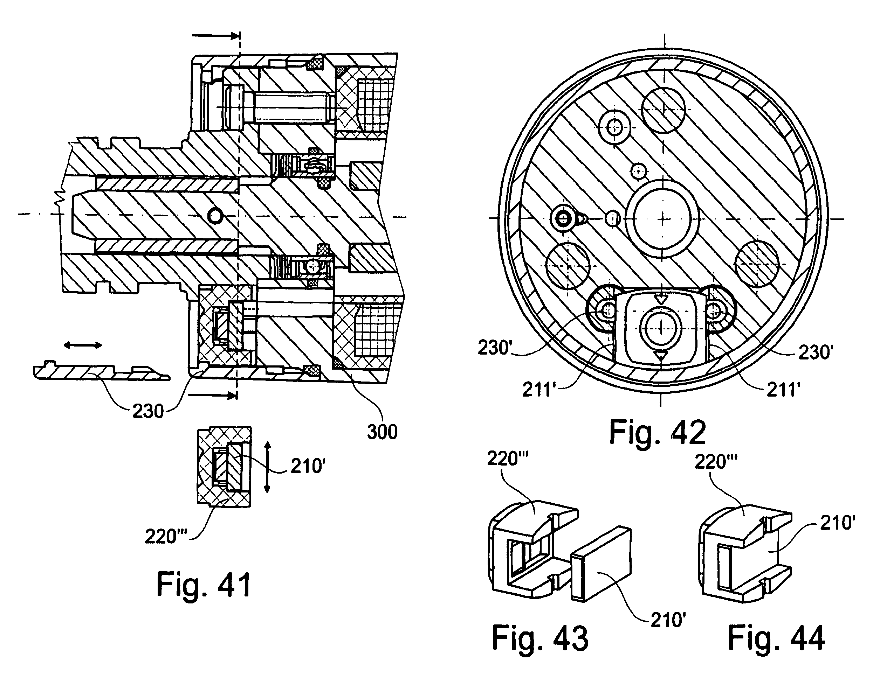

In den Figuren 41 bis 44 ist eine weitere Variante dargestellt, mit dem Halteteil 220"' und mit einem entsprechenden Trägerelement 210'. Dabei sind in der Querschnittskizze der Fig. 42 alternativ gestaltete Kontaktstifte 230' gezeigt, die zur Kontaktierung an entsprechend alternativen Kontaktflächen 211' des Halteteils 220"' bzw. des entsprechenden Trägerteils 210' ausgebildet sind. Die Kontaktflächen 211' sind dabei mit Bezug auf die Längsachse L seitlich angeordnet. Die Kontaktierung erfolgt hierbei also an zwei gegenüberliegenden Außenflächen bzw. Außenkanten des Trägerelements 210' bzw. des Halteteils 220"', und zwar vorzugsweise durch Klemmung zwischen den beiden Kontaktstiften 230'. Diese Kontaktstifte 230' können wiederum mit entsprechenden Kontaktstäben 230 elektrisch leitend verbunden sein, die wiederum vorzugsweise von dem Mantelelement 6 umgeben sind. Im Fall einer derartigen seitlichen Kontaktierung können neben federnd gelagerten Kontaktstiften auch massive Leiter in Kunststoff eingebettet, verwendet werden. Das Halteteil 220"' kann wiederum als "Schieber" gestaltet sein und über ein Sicherungselement, beispielsweise in Form eines Halterings oder eines anderen Sperrelements fixiert sein.

Dieses System ermöglicht einen einfachen Ein- und Ausbau durch (i) Lösen und Abnehmen des Halterings, (ii) radiales Ziehen des Schiebers, (iii) Einsetzen einer neuen LED und (iv) Wiederaufsetzen des Haslterings.

Bei dieser Ausgestaltung kann das Beleuchtungselement bzw. das Halteteil 220"' im Fall einer falsch gepolten Kontaktierung sehr einfach von dem Motorgehäuse 300 getrennt, entsprechend gedreht und wieder eingesetzt werden, um die richtige Polung herzustellen.

Es kann also ein Beleuchtungselement gebildet sein, das das optische Element 221, die LED 200 und das Trägerelement 210 umfasst oder aus diesen Bauteilen besteht. Das Beleuchtungselement kann einen Schieber bilden, der im Motorgehäuse 300 fixiert ist. Der Schieber und das Motorgehäuse 300 können so gestaltet sein, dass der Schieber 180° um eine Achse drehbar in das Motorgehäuse 300 eingesetzt werden kann.

Bei dem Trägerelement 210 kann es sich um einen räumlich spritzgegossenen Schaltungsträger handeln (3-D MID). Die Kontaktflächen können dabei als Teil der Leiterstruktur an Seitenflächen ausgebildet sein. Die Kontaktflächen und Leiter können den Schichtaufbau CuNiAu bzw. WoNiAu aufweisen. Der Schaltungsträger kann aus Keramik (Aluminiumoxid oder Aluminiumnitrid) hergestellt sein bzw. bestehen. Der Schaltungsträger kann aus LTCC (low temperature cofired ceramic) als Multilayer ausgebildet sein. Der Schaltungsträger kann einen Metallkern enthalten. Der Schaltungsträger kann Mittel (Form, Nut-Feder, Nase-Ausnehmung) zur Ausrichtung zur Optik enthalten. Die Verbindung zwischen Optik - Gehäuse und Schaltungsträger kann mittels Schnappverbindung oder mittels Klebeverbindung ausgeführt sein. Das Gehäuse kann Nuten (Kapillaren) zur Klebsstoffverteilung aufweisen. Das Gehäuse kann Ausnehmungen aufweisen, welche als Klebstoffreservoir bzw. Nachfüllbecken genutzt werden können. Ein Hohlraum zwischen LED - Schaltungsträger und Optik-Gehäuse kann mit einer transparenten Vergussmasse oder mit einem trasnparenten Klebstoff verfüllt sein.

Ein weiterer Aspekt betrifft ein Kupplungselement der Elektromotoranordnung, das zur Verbindung mit dem Handstück vorgesehen ist.

Versuche haben gezeigt, dass die Führungslänge an der Kopplung von Hand/Winkelstück mit dem Motor ohne Einbuße an Funktion reduziert werden kann.

Am Motor wird der Kupplungszapfen entsprechend gekürzt. Beim Hand- und Winkelstück kann die Eintauchtiefe (Ausnehmung zur Aufnahme des Kupplungszapfens) entsprechend verkürzt werden, bzw. kann das Hand- und Winkelstück entsprechend kürzer ausgeführt werden.

Ein Motor mit gekürztem Kupplungszapfen kann jederzeit auch mit einem Hand-Winkelstück in alter Ausführung verwendet werden. Der Ergonomievorteil durch ein kürzeres Instrument wirkt sich in diesem Fall jedoch nicht aus. Ein Hand- und Winkelstück in neuer Ausführung kann in Kombination mit einem Motor in alter Ausführung (Kupplungszapfen lang) nicht betrieben werden. Der Kupplungszapfen stößt Innen im Winkelstück an und kann nicht arretiert werden.

Die nachfolgenden Merkmale der bekannten INTRAmatic-Kupplung gemäß ISO 3964 bleiben erhalten:
- Über Nuten und Bohrungen in der Wandung des Kupplungszapfens werden die Medien Kühlluft, Sprayluft, Spraywasser dem Winkelstück zugeführt. Zur Medientrennung (Sprayluft/Spraywasser) und Dichtung sind zwischen den einzelnen Austrittsöffnungen am Umfang des Kupplungszapfens O-Ringe angeordnet. Bei Bedarf wird das Rücksaugen von Wasser aus dem Hand-Winkelstück in die Versorgungsleitung durch eine Abdeckung der Austrittsöffnung im Kupplungszapfen mittels O-Ring verhindert. Bei Förderung von Spray-Wasser hebt der O-Ring ab und lässt das Spraywasser zur Bearbeitungsstelle fließen. Liegt kein Förderdruck an, verschließt der O-Ring die Austrittsöffnung und verhindert so ein Rücksaugen von Wasser aus dem Hand- und Winkelstück in den Motor und die

Versorgungsleitung.
- Arretierung / Haltering
- Einkopplung Licht in Glasfiberstab
- Verdrehsicherung / Einrastung

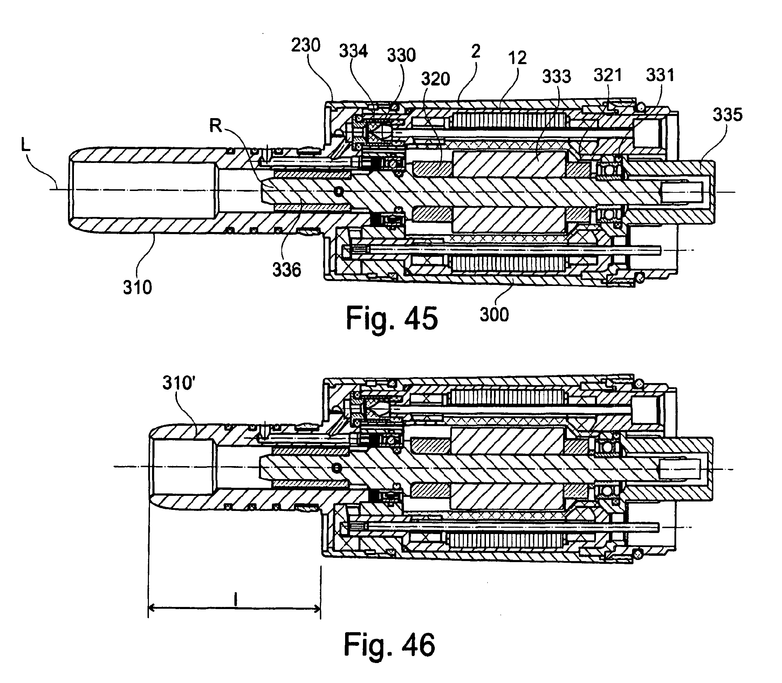

Das Konzept der erfindungsgemäßen Kupplung ist anhand der Figuren 45 und 46 näher dargestellt. Fig. 45 zeigt den Kupplungszapfen 310 gemäß dem Stand der Technik, insbesondere als Teil der bekannten INTRAmatic Kupplung. Fig. 46 zeigt die Gestaltung mit entsprechend verkürztem Kupplungszapfen 310'. Die Rotorwelle ist durch zwei Lager 330, 331 drehbar um die Längsachse *L* gelagert angeordnet. Das Motorgehäuse 300 umgibt die zwei Lager 330, 331 mit Bezug auf die Rotorwelle bzw. die Längsachse *L* radial von außen. Weiterhin sind ein erster Wuchtring 320, ein zweiter Wuchtring 321 und ein Dauermagnet 333 als Teil des Rotors zu erkennen. Ferner sind ein Rücksaugstopp 334 und ein Lagerschild 335 bezeichnet. Die Rotorwelle greift mit einer Klaue 336 von innen in den Kupplungszapfen 310 ein.

Die Ausgestaltung gemäß Fig. 46 mit dem erfindungsgemäß gekürzten Kupplungszapfen 310' unterscheidet sich von der in Fig. 45 gezeigten Ausgestaltung lediglich in der Länge *l* des Kupplungszapfens 310'.

Gemäß dem Stand der Technik wird die INTRAmatic-Kupplung für Hand- und Winkelstücke nach ISO 3964 an einer Stirnseite eines Motorgehäuses 300 der Elektromotoranordnung angeschraubt. Dabei besteht die Gefahr, dass die beiden entsprechenden Stirnflächen von Motorgehäuse 300 einerseits und Kupplungselement andererseits nicht exakt plan laufen; dies kann dazu führen, dass der Kupplungszapfen 310 im montierten Zustand eine deutliche Schrägstellung aufweist, was im Weiteren zu einer Missweisung des aufgesetzten Handstücks führen kann. Außerdem sind ergonomische Aspekte wie Gewicht und kompakte Baugröße wesentliche Faktoren bei dentalen Antrieben.

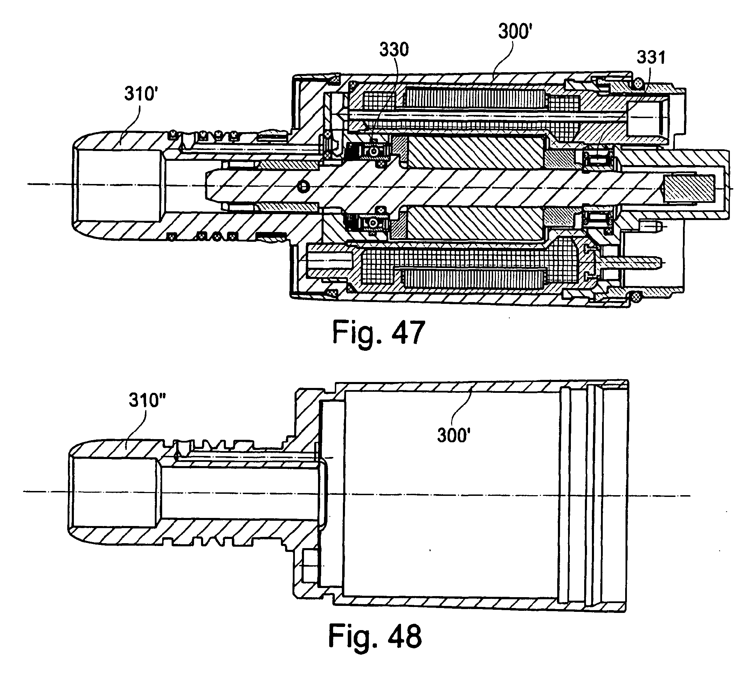

Das genannte Problem lässt sich dadurch lösen, dass - wie aus den Figuren 47 und 48 beispielhaft hervorgeht - das Motorgehäuse 300', das insbesondere wie beschrieben die beiden Lager 330 und 331 zur Lagerung der Rotorwelle aufweist, und das an der Elektromotoranordnung angeordnete Kupplungselement in Form des Kupplungszapfens 310" einteilig bzw. einstückig ausgebildet sind. Die Elektromotoranordnung kann auf diese Weise insbesondere auch kürzer und leichter gestaltet werden. Die Missweisung ist minimal, da das Kupplungselement bzw. der Kupplungszapfen 310" und das Motorgehäuse 300' in einer Aufspannung gefertigt werden können. Eine eventuell vorhandene Fehlstellung durch den verkürzten Kupplungszapfen 310" wird damit reduziert.

Weiterhin ist die Schallkopplung von der Elektromotoranordnung zum Handstück reduziert, es kommt zu weniger Abstrahlung durch das Instrument. Somit lässt sich mit der Elektromotoranordnung mit dem verkürzten Kupplungszapfen 310" und der einteiligen Ausführung von Motorgehäuse 300' und Kupplungselement das Geräusch, das bei Betrieb in Verbindung mit dem aufgesetzten bzw. angekuppelten Handstück entsteht, leiser gestalten.

Letztendlich wird dementsprechend ein kurzer, sterilisationsbeständiger Dentalmotor geschaffen, der sich durch folgende charakteristischen Eigenschaften auszeichnet:
- die Verwendung einer Lichtquelle basierend auf SMD-LED bzw. LED als Halbleiterchip;
- die Kürzung der INTRAmatic-Kupplung auf 20 bis 25mm
- einen hermetisch dicht umspritzten Stator mit integrierten Medienrohren und angeformten Anschlussbuchsen
- die Ausbildung der Statorwicklung als Spulen-Segmentwicklung anstatt H-Wicklung bzw. Dreieck
- die Formung des Wickelkopfes mit Öffnung für Medienrohre.

## Patentansprüche

1. Elektromotoranordnung für ein medizinisches, insbesondere ein dentales Handstück, aufweisend
- einen Rotor (*R*) mit einer Rotorwelle,
- einen Stator (2), der mit Bezug auf die Rotorwelle um den Rotor herum angeordnet ist und
- ein Medienrohr (4) zur Durchleitung eines Mediums,
- ein durch Umspritzen gebildetes, vorzugsweise aus einem Hochtemperaturpolymer bestehendes, Mantelelement (6), das, mit Bezug auf die Rotorwelle, sowohl den Stator (2) als auch das Medienrohr (4) von außen ringförmig geschlossen dicht umgibt,
**dadurch gekennzeichnet,**
**dass** der Stator (2) einen rohrförmigen Spulenträger (10) aufweist, der, mit Bezug auf die Rotorwelle, eine radial innere Begrenzung des Stators (2) bildet, wobei das Mantelelement (6) unmittelbar an den Spulenträger (10) angrenzend angeordnet ist.

2. Elektromotoranordnung nach Anspruch 1,
bei der der Stator eine Statorwicklung (8) aufweist,
wobei ein erster Teil (81) der Statorwicklung (8) mit Bezug auf die Rotorwelle radial außerhalb des Medienrohrs (4) angeordnet ist und ein zweiter Teil (82) der Statorwicklung (8) radial innerhalb.

3. Elektromotoranordnung nach Anspruch 1 oder 2,
bei der sich das Mantelelement (6) längs der Rotorwelle betrachtet zu beiden Seiten über den Stator (2) hinaus erstreckt und vorzugsweis zu beiden Seiten des Stators (2) das Medienrohr (4) jeweils unmittelbar ringförmig umgibt.

4. Elektromotoranordnung nach Anspruch 3,
bei der durch das Mantelelement (6) ein Einführtrichter (61) für das Medienrohr (4) gebildet ist.

5. Elektromotoranordnung nach einem der vorhergehenden Ansprüche, bei der der Spulenträger (10) ein Halteelement (101), vorzugsweise ein Rastelement, zur Fixierung des Medienrohrs (4) aufweist.

6. Elektromotoranordnung nach einem der vorhergehenden Ansprüche, bei der der Stator (2) ein rohrförmiges Rückschlusselement (12) aufweist und der Spulenträger (10) ein Anlageelement (102) zur Positionierung des Rückschlusselements (12) längs der Rotorwelle und/oder ein Zentrierelement (103) zur Zentrierung des Rückschlusselements (12) mit Bezug auf die Rotorwelle aufweist.

## Claims

1. An electric motor arrangement for a medical, in particular a dental, handpiece, having
- a rotor (R) with a rotor shaft,
- a stator (2), which is arranged around the rotor with respect to the rotor shaft, and
- a media tube (4) for guiding a medium through it,
- a sheath element (6) formed by encapsulation by injection molding and preferably consisting of a high-temperature polymer, the sheath element, with respect to the rotor shaft, surrounding both the stator (2) and the media tube (4) tightly in a closed manner in a ring-shaped manner from outside,
**characterized in that**
the stator (2) has a tubular coil carrier (10), which, with respect to the rotor shaft, forms a radially inner boundary of the stator (2), wherein the sheath element (6) is arranged in a manner directly adjoining the coil carrier (10).

2. An electric motor arrangement according to claim 1, wherein the stator has a stator winding (8),
wherein a first part (81) of the stator winding (8), with respect to the rotor shaft, is arranged radially outside the media tube (4), and a second part (82) of the stator winding (8) radially inside.

3. An electric motor arrangement according to claim 1 or 2,
wherein the sheath element (6) extends beyond the stator (2) on both sides as viewed along the rotor shaft and surrounds the media tube (4) in each case directly in a ring-shaped manner preferably on both sides of the stator (2).

4. An electric motor arrangement according to claim 3,
wherein an introduction funnel (61) for the media tube (4) is formed by the sheath element (6).

5. An electric motor arrangement according to one of the preceding claims,
wherein the coil carrier (10) has a holding element (101), preferably a latching element, for fixing the media tube (4).

6. An electric motor arrangement according to one of the preceding claims,
wherein the stator (2) has a tubular return path element (12), and the coil carrier (10) has an abutment element (102) for positioning the return path element (12) along the rotor shaft and/or a centering element (103) for centering the return path element (12) with respect to the rotor shaft.

## Revendications

1. Système de moteur électrique pour une pièce à main médicale, en particulier une pièce à main dentaire, comportant
- un rotor (R) avec un arbre de rotor,
- un stator (2) qui, par référence à l'arbre de rotor, est disposé autour du rotor, et
- un tube (4) pour la circulation d'un fluide,
- une enveloppe (6) qui est formée par surmoulage et est réalisée de préférence dans un polymère haute température et qui, par référence à l'arbre de rotor, entoure de l'extérieur, de manière étanche en étant fermée de manière annulaire, tant le stator (2) que le tube (4),
**caractérisé en ce que** ledit stator (2) comporte un porte-bobine (10) tubulaire qui, par référence à l'arbre de rotor, forme une paroi radialement intérieure du stator (2), ladite enveloppe (6) étant directement adjacente au porte-bobine (10).

2. Système de moteur électrique selon la revendication 1, dans lequel le stator comporte un enroulement de stator (8), une première partie (81) de l'enroulement de stator (8) étant disposée, par référence à l'arbre de rotor, radialement à l'extérieur du tube (4), et une deuxième partie (82) de l'enroulement de stator (8) étant disposée radialement à l'intérieur.

3. Système de moteur électrique selon la revendication 1 ou 2, dans lequel l'enveloppe (6), s'étend le long de l'arbre de rotor au-delà du stator (2) sur les deux côtés de celui-ci et entoure directement sous forme annulaire le tube (4), de préférence sur les deux côtés du stator (2).

4. Système de moteur électrique selon la revendication 3, dans lequel une trémie d'introduction (61) pour le tube (4) est formée par l'enveloppe (6).

5. Système de moteur électrique selon l'une quelconque des revendications précédentes, dans lequel le porte-bobine (10) comporte un élément de retenue (101), de préférence un élément de blocage, pour la fixation du tube (4).

6. Système de moteur électrique selon l'une quelconque des revendications précédentes, dans lequel le stator (2) comporte une culasse (12) tubulaire, et le porte-bobine (10) comporte un élément d'appui (102) pour le positionnement de la culasse (12) le long de l'arbre de rotor et/ou un élément de centrage (103) pour le centrage de la culasse (12) par rapport à l'arbre de rotor.
